# EUROPEAN PATENT SPECIFICATION

(11) **EP 0 369 977 B1**
(45) Date of publication and mention of the grant of the patent: **01.06.1994**
(21) Application number: 89850400.6
(22) Date of filing: 16.11.1989
(51) Int. Cl.: B65H 18/16, B65H 27/00

(54) **Method and device in the reeling of a paper web**
Vorrichtung und Verfahren zum Aufwickeln einer Papierbahn
Procédé et dispositif pour enrouler une bande de papier

(30) Priority: 17.11.1988 FI 885338
(43) Date of publication of application: 23.05.1990
(73) Proprietor: VALMET PAPER MACHINERY INC., 00130 Helsinki (FI)
(72) Inventor: Ehrola, Juha, SF-40600 Jyväskylä (FI)
(74) Representative: Rostovanyi, Peter

(56) References cited:
- EP-A- 0 221 448
- DE-A- 3 735 491
- DE-A- 3 735 492
- GB-A- 2 168 040
- US-A- 3 837 593

## Description

The invention concerns a method in a reel-up for paper web, wherein the roll is formed around a reeling drum and/or on the support of carrier rolls or carrier belts and wherein a reeling cylinder is used, which forms a reeling nip with the roll to be produced.

Further the invention concerns a reel-up intended for carrying out the method of the invention for the reeling of a paper web or equivalent, comprising a reeling cylinder or reeling cylinders, which is/are mounted in connection with the frame construction of the reel-up and on which said frame construction supporting members are fitted, by means of which the reeling drum is supported around which the roll to be produced is wound while making use of the support and/or drive nip or nips formed between the roll and the reeling cylinder.

A Pope-type reel-up is used commonly for the reeling of a paper web coming, e.g., out of a paper machine, coating machine, supercalender, or printing machine. The web is reeled onto a drum, and the roll that is being formed is pressed against the Pope or reeler cylinder, over which the web runs within a certain sector and which is rotated at the circumferential speed corresponding to the desired web speed. Before the roll is completed, a new drum can be brought, having been accelerated to the running speed, into nip contact with the Pope cylinder so that it also obtains the exactly corresponding circumferential speed. As soon as the paper roll has reached the desired diameter, it is displaced apart from the Pope cylinder. Thereby its speed of rotation starts slowing down, which results therein that a web loop is formed between the new reeling drum and the complete roll. This loop is guided, e.g. by means of a compressed-air jet, to be wound around the new reeling drum, whereby it is torn apart from the complete roll, or the web is commonly also cut-off by means of air jets.

In respect of the prior art related to the present invention, reference is made by way of example to the following published FI Patent Applications of the applicant, Nos. 71,107, 73,944, 74,446, and 75,788.

In Pope-type reelers of paper machines and equivalent, especially at the highest speeds and in particular when LWC- and SC-paper qualities are being reeled, it is a problem that wrinkles are formed in the innermost layers in the rolls so that the innermost portions of the reels become broke. The proportion of the paper that becomes broke may be even 2 to 3 per cent, which causes considerable economic losses for the paper mill. It is considered that the main reason for the formation of wrinkles, so-called "bugs", in the innermost parts of paper rolls is variations in hardness (density) occurring in the innermost parts of a paper roll. Variations in hardness are caused largely by the uncontrollable variations in the linear load between the paper roll and the Pope cylinder as well as, also, by variations in the tightness of the paper web to be reeled, which will be described more thoroughly later.

The distribution of hardness in a paper roll produced by means of Pope-type reelers of paper machines is affected mainly by two factors. The first factor is the linear load between the reeling cylinder and the paper roll, and the second factor is the tightness of the paper web on reeling, i.e., for example, the difference in speed between a calender and the reel-up. In the present invention, the intention is to start eliminating said drawbacks by means of control of said linear load in the reeling nip. Distribution of hardness in a roll means the radial variation in density in the paper roll. Deficient distribution of hardness or a distribution of hardness that includes portions of discontinuity causes difficulties (breaks) in the subsequent stages of treatment of the paper, and in the worst case tears and folds are formed in the paper near the bottom of the roll. These drawbacks are also supposed to be eliminated by means of the present invention, at least partially.

One drawback in the prior-art reelers is sliding of the paper against the face of the reeling cylinder, said sliding depending on the tightness of the paper in the area of the reeling cylinder and on the surface pressure resulting from this against the face of the reeling cylinder. Another factor that affects the sliding is the linear load that is produced by the primary and secondary reeling forks on the growing paper roll against the reeling cylinder. Further, occurrence of sliding is affected by the surface properties of the paper to be reeled and of the reeling cylinder, i.e. by the friction coefficient between said faces, which is also affected by the moisture content of the paper.

An increased tightness of the paper reduces said tendency of sliding, for thereat the surface pressure of the paper against the reeling cylinder becomes higher and the friction force is increased. The tensile strength of the paper, however, sets an upper limit for an increase in tightness in the form of increased frequency of breaks.

The keeping of the linear load between the roll that is being formed and the reeling cylinder at a sufficiently high and uniform level is made more difficult by the fact that the reeling is started on primary forks placed in their upper positions, being continued at a later stage on secondary forks. The primary forks bring the roll into a downwardly inclined contact with the face of the reeling cylinder, whereby the roll starts receiving its rotating power from the circumference of the reeling cylinder. When the roll becomes larger and when the primary forks are gradually lowered to their lower positions, the linear load between the roll and the reeling cylinder is lowered quite evenly and steeply, depending on the reduction of the power component resulting from the force of gravity of the earth as the position of the growing roll is changed in relation to the reeling cylinder.

The difficult part in the control of said linear load consists of the stage at which the growing roll is shifted from the primary forks onto the secondary forks. In practice, thereat significant variations occur in the linear load, which variations again permit momentary sliding of the paper on the face of the reeling cylinder. This results in occasional wrinkles in the paper, described above, in the initial stage of reeling.

Shifting of the roll from the primary forks onto the secondary forks may also cause variations in tightness in the paper, which may be one reason for sliding of and wrinkles in the paper because of the varying surface pressure.

Prior-art means of avoiding the above problem of sliding and its consequences include setting of the tightness of the paper as high as possible by regulation of the difference in speed between the reeling cylinder and the nearest preceding device of operation. As was stated above, thereat a limiting factor consists of an increase in the susceptibility of breaks of the web and of deterioration of the quality properties of the paper, because thereat, e.g., the tensile strength and the elongation become lower.

As is well known, a second means that is employed is increasing the linear load between the growing roll and the reeling cylinder to a maximally high level by, at the support forks, in particular at the secondary forks, using an excessively high loading force by means of which the roll is pressed against the reeling cylinder. A drawback of this procedure is deterioration of the quality properties of the paper, because in particular the tensile strength and the elongation become lower, as was the case when the preceding means was employed. In such a case, the outermost layers in the roll are also packed excessively tightly, i.e. a roll hardness is produced which becomes higher towards the outer layers of the roll, which is also a significant drawback.

The object of the present invention is to provide a novel reeling method and a novel reeling device wherein the major part of the drawbacks discussed above can be avoided.

It is a particular object of the invention to provide a reeling method and a reeling device by means of which a roll of higher uniformity is obtained so that a reduced amount of paper becomes broke.

In view of achieving the objectives stated above and those that will come out later, the method of the invention is characterized as defined in claim 1.

On the other hand, the device in accordance with the invention is characterized as defined in claim 7.

From US-A-3 837 593 is known a floating roll structure having a longitudinal chamber for pressure fluid between the mantle and the support of the roll. The pressure fluid applies the same pressure effect on the inner surface of the roll mantle in the region allowed by said chamber. It is thus a question of producing an even pressure on the inner surface of the mantle, i.e., the same pressure prevails at every point in the direction of the axis of the roll. Consequently, the US patent is not concerned with the control of the distribution of the linear load in a nip.

Variable-crown rolls are known from DE-A-3 735 492 and EP-A-0 221 448, which are intended to be used expressly in press nips, smoothing nips or calendering nips of paper machines. These documents do not suggest the possibility to apply the rolls concerned in the reeling of a paper web.

According to the invention, the linear load in the reeling nip is kept substantially uniform by making use of the means for variation or adjustment of the deflection of the cylinder mantle, which are fitted inside the mantle of the reeling cylinder and by means of which the deflection of the mantle of the reeling cylinder at the different stages of reeling is affected under control so that the distribution of the linear load in the reeling nip remains sufficiently uniform in view of the goals aimed at. When necessary, the level of the linear load in the reeling nip is adjusted by means of said means for adjustment of deflection, which said level of linear load can also be controlled by means of power units acting upon the ends of the axle journals of the reeling cylinder or of the reeling drum.

Even though, above and in the following, the invention has been described mainly with reference to Pope-type reelers, in this connection it should already be emphasized that the invention is also suitable for use in various center-driven reelers in themselves known and provided with carrier rolls or with sets of carrier belts. Besides in connection with one reeling nip, the invention is also suitable for use in reelers which are provided with two or even more reeling nips.

In the following, the prior art most closely related to the invention as well as its drawbacks and some advantageous exemplifying embodiments of the invention will be described in detail with reference to the schematical illustrations in the accompanying drawing.

Figure A1 shows the situation of reeling-drum exchange in a prior-art Pope-type reel-up.

Figure A2 illustrates the distribution of the linear load in a nip in accordance with Figs. A1 and A3.

Figure A3 is a vertical sectional view of a nip as shown in Fig. A1.

Figures B1, B2 and B3 show the situation of prior-art reeling, in a way corresponding to Figures A1, A2 and A3, after the reeling drum has been shifted onto support by the rails in the reel-up.

Figure 1A shows a reeling nip in accordance with the method and the device in accordance with the present invention in the situation of reeling-drum exchange in a way corresponding to Figs. A1 and B1.

Figure 1B illustrates the distribution of the linear load in a nip as shown in Fig. 1A.

Figure 1C is a vertical sectional view of a nip as shown in Fig. 1A.

Figure 2A shows the situation, in a way corresponding to Fig. B1, in a reeling method and device in accordance with the present invention at the stage at which the reeling drum has been shifted onto support of the rails in the reel-up.

Figure 2B illustrates the distribution of the linear load in a reel-up as shown in Fig. 2A.

Figure 2C is a vertical sectional view of a reel-up and a reeling situation as shown in Fig. 2A.

Figures 3A, 3B and 3C show three subsequent different stages of operation of a reeling method and reeling device in accordance with the invention.

Figure 4 is a vertical sectional view of another embodiment of the invention in the reeling stage corresponding to Figs. 2C and 3C.

Figure 5 is a side view of the overall construction of a reel-up in accordance with the invention including its frame parts.

Figure 6 shows another exemplifying embodiment of a reel-up in accordance with the invention.

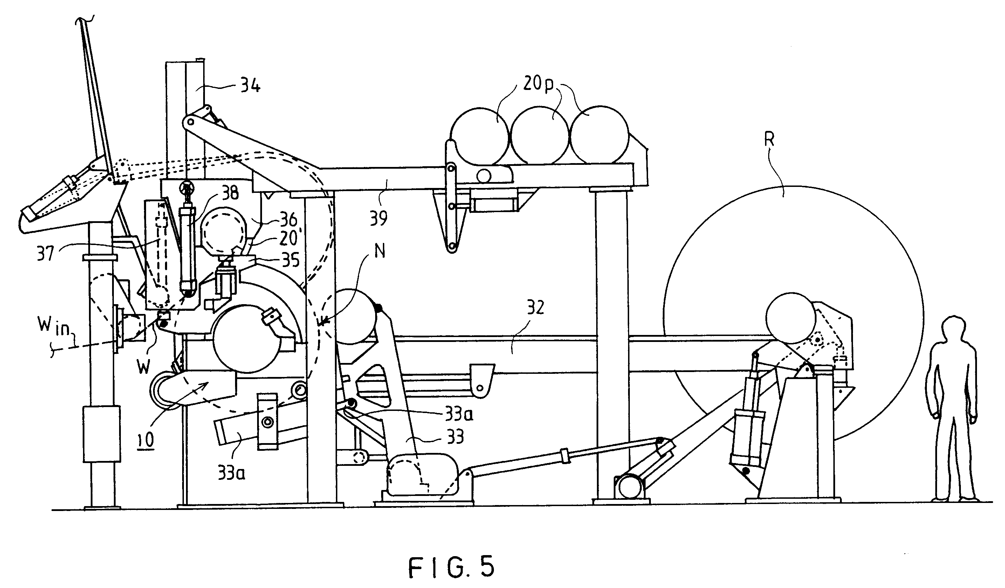

The main part of the Pope-type reeler shown in Fig. 5 consists of a reeling cylinder 10, along whose circumference the paper web W runs over a small sector before it is shifted onto the circumference of the paper roll that is being formed around the reeling drum 20. The drum 20 rests and revolves as supported on two support rails 32, and secondary forks 33 loaded by cylinders 33a press the drum towards the reeling cylinder 10. The secondary forks 33 also shift the paper roll R apart from the reeling cylinder 10 when the desired diameter of the roll R has been reached.

The complete paper rolls R are transferred along the support rails 32 to further treatment, from where the empty reeling drums 20p are returned, e.g., onto storage rails 39 mounted above the support rails 32.

The reeling-drum 20 exchange device consists of guides 34 projecting upwards from the side of the reeling cylinder 10, said guides being mounted at their lower ends as rotatable, as well as, at each of said guides 34, of gap sledges moving up and down, in which, in the gap between their lower-jaw piece 35 and their upper-jaw piece 36, the reeling drum 20′ can be enclosed by the areas of its bearing parts. The parts 34, 35 and 36 constitute the so-called primary forks. The movement of the jaw pieces is arranged in such a way that the hydraulic cylinder 37 moves the lower-jaw piece 35, which is connected to the upper-jaw piece 36 by the intermediate of the hydraulic cylinder 38. Thus, the hydraulic cylinder 38 can be used for opening or closing of the gap between the jaw pieces 35,36 only.

When the reeling drum 20 is being exchanged, the lower-jaw pieces 35 are raised to the level of the ends of the auxiliary rails 39, and the upper-jaw pieces 36 are raised to their upper positions. At the same time, the guides 34 are rotated by means of a power unit, which is not shown in Fig. 5, to such a position that no gap remains between the lower-jaw piece 35 and the end of the auxiliary rail. The reeling drum 20p is allowed to roll into the gaps of the jaw pieces, which are closed by lowering the upper-jaw pieces 36. The lower-jaw pieces 35 are lowered so that the circumference of the reeling drum 20′ is placed at the proximity of the circumference of the reeling cylinder 10, whereupon the guides 34 are rotated in the direction of rotation of the reeling cylinder 10, whereby, owing to the eccentric journalling of the guides 34, the distance between the drum 20′ and the cylinder 10 is reduced further until the drum 20′ reaches contact with the paper web W running on the cylinder 10 and reaches a peripheral speed corresponding to the speed of the paper web W. The transfer of the web W onto the new drum can now be carried out in the way described earlier, and the new reeling drum can be lowered onto the support rails in place of the preceding reeling drum.

The construction and the operation of a reel-up discussed above are in themselves known, and the present description is supposed to make it easier to understand the invention and its background. It should be emphasized that the present invention can be applied even to highly different reelers, whose construction and operation may differ substantially from those described above in connection with Fig. 5.

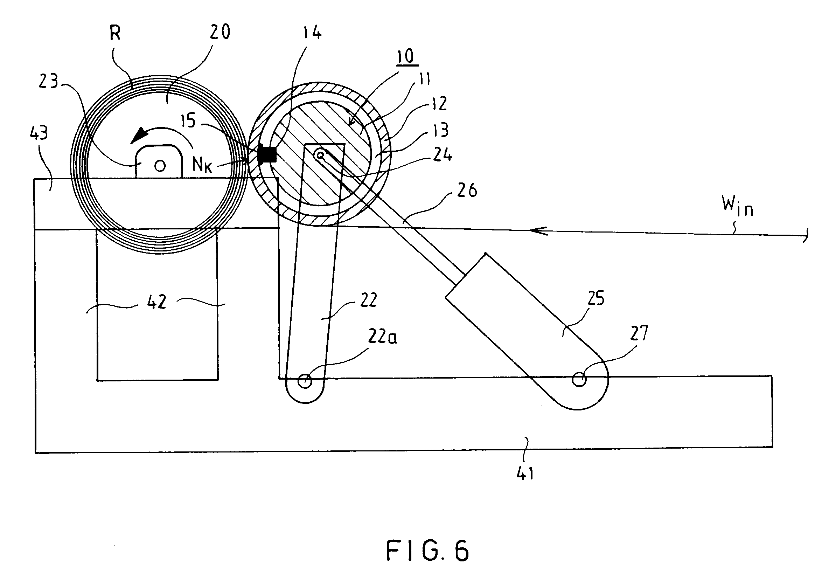

In stead of the Pope-type reel-up illustrated in Fig. 5, the invention may also be applied in a reel-up in accordance with Fig. 6, to be described in more detail later, or in other, corresponding center-driven reelers or reelers provided with carrier rolls or carrier belts, reference being made in respect of the latter ones to the applicant's FI Patent Applications Nos. 872223, 872224, and 872225.

In the following an example of construction and operation of the invention will be described in more detail.

In accordance with Figs. A1 and A3, the reeling cylinder 10′ in a prior-art Pope-type reel-up is supported by its axle journals with the support forces T. The reeling cylinder 10′ is also driven by means of its axle journals. In Figs. A1 and A3 the reeling drum 20 is shown in the situation of reeling-drum exchange, wherein an empty reeling drum 20 has been brought into connection with the reeling cylinder 10′ to form a reeling nip N₁, at which stage the paper web arriving from the direction Wᵢₙ starts being rolled onto the empty reeling drum 20 as the bottom Rₒ of the roll. As is known in prior art, at this stage the reeling drum 20 is supported from both of its axle journals so that almost all the weight of the reeling drum 20 is relieved. Hereby the distribution p₁ of the linear load in the reeling nip N₁ becomes similar to that shown in Fig. A2, so that the maximum of the linear load occurs at the middle of the nip N₁ and the minimums at both ends of the nip N₁, at which the nip N₁ may be even open. In such a case, an optimal level and distribution K-K of the linear load is not even nearly reached.

The prior-art Pope-type reeler operates in accordance with Figures B1, B2 and B3 at the stage when the reeling drum 20 has been shifted onto support by the rails 32 in the Pope-type reeler, at which time it is loaded by the forces F₂ by its ends towards the Pope cylinder 10′. Thereat the distribution of the linear load is similar to that shown in Fig. B2, so that the maximums of the linear load in the reeling nip N₂ are at both ends of the nip N₂ and the minimum is at the middle. In this case as well, the distribution p₂ of the linear load is far from the optimal level and distribution K-K.

The own weight of the reeling drum 20 is about 10 kN/m, whereas the linear loads in reeling are of an order of 2...3 kN/m. Thereat, in a situation of reeling-drum exchange, when the empty reeling drum 20 is placed above the pope cylinder 10, almost the entire weight of the reeling drum 20 must be relieved by the ends of the reeling drum 20. Since the deflection of the reeling drum by the effect of its own weight is about 0.3...0.5 mm, it is impossible to obtain a uniform distribution of the linear load. Likewise, when the reeling drum 20 rests on the rails 32, when it is loaded by its ends with a force of 2...3 kN/m, in particular with an almost empty reeling drum 20, no uniform distribution of the linear load is obtained, but the linear load is higher at the ends of the nip.

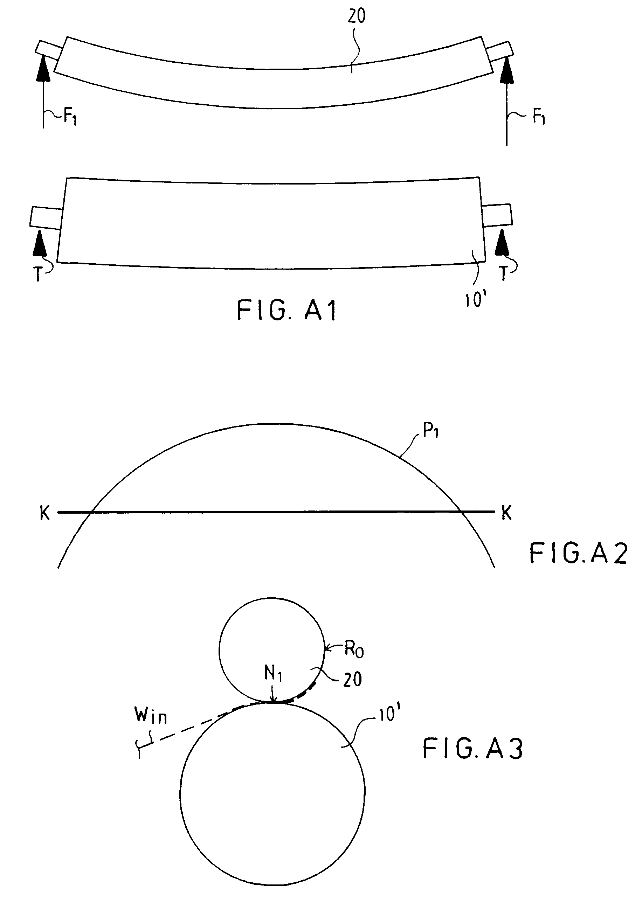

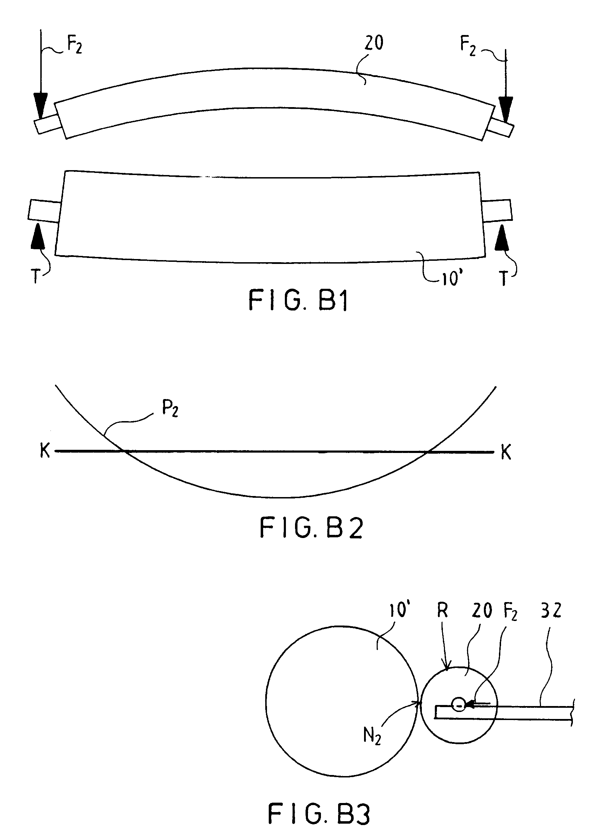

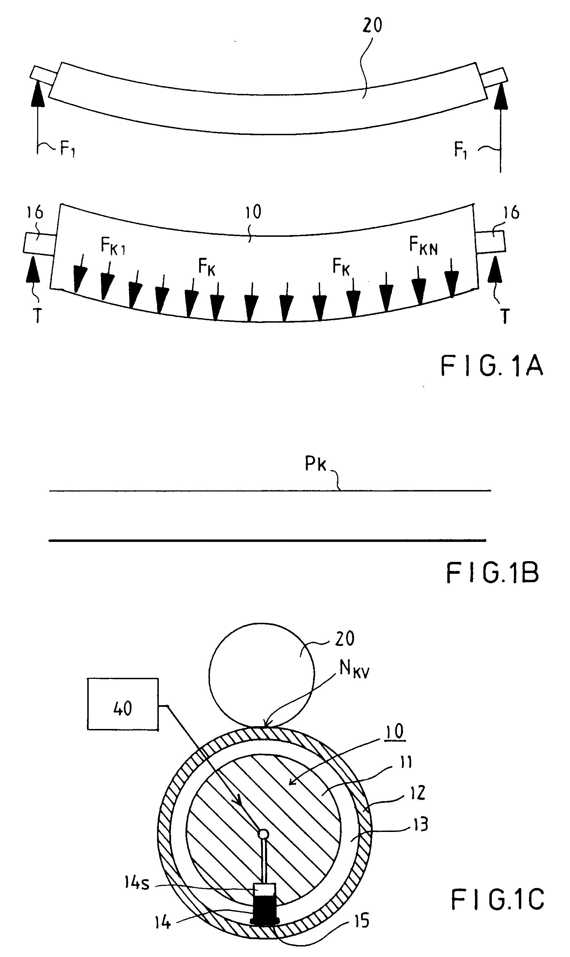

According to the present invention, as the Pope cylinder or reeling cylinder 10 expressly a variable-crown or profile-adjusted Pope cylinder 10 is used. As is shown in Figs. 1C, 3A, 3B, 3C and 2C, the variable-crown or profile-adjusted Pope cylinder 10 comprises a stationary central axle 11, which may be rotatable around its centre axis. Around the central axle 11 the cylinder mantle 12 is arranged revolving so that a space 13 remains between the central axle 11 and the mantle 12. Into the cylinder bores 14s made into the central axle 11, a series of loading pistons 14 has been fitted, which load the glide shoes which form a glide face 15 with the inside face of the mantle 12. The glide faces 15 are lubricated by means of the same pressure fluid by which the loading pistons 14 are loaded.

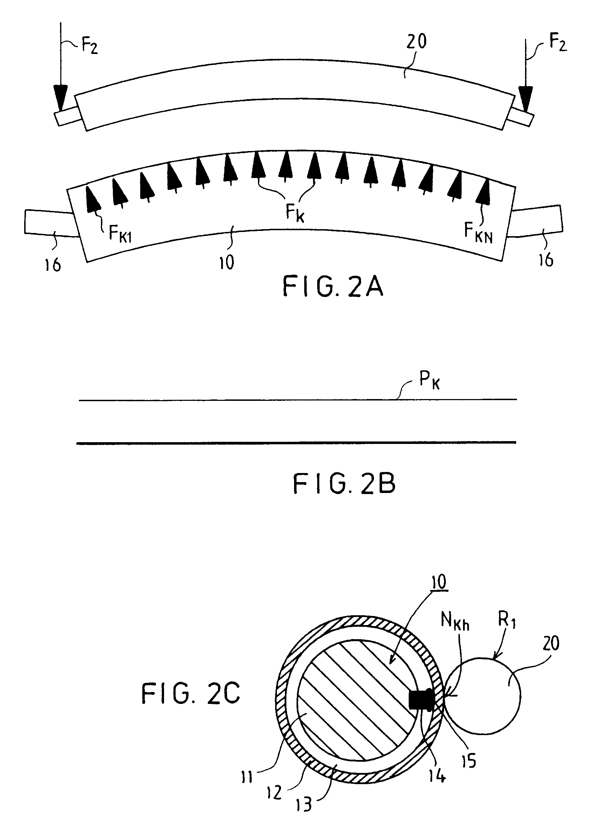

In Fig. 1C the source of pressure 40 is illustrated schematically, an adjustable pressure being fed from said source of pressure into each cylinder bore or block of bores so that, by means of the loading cylinders 14s and glide shoes, adjustable forces Fₖ₁...F_{kN} can be applied to the roll mantle (Figs. 1A and 2A).

As is shown in Fig. 1A, in a situation of reeling-drum exchange the reeling drum is supported by both of its axle journals by means of a force F₁ directed upwards and by means of forces produced by means of loading members 14,15 turned to the opposite side of the reeling nip Nₖᵥ. The Pope cylinder 10 is deflected by means of the forces Fₖ₁...F_{kN} while at the same time supporting the Pope cylinder 10 by its axle journals 16 so that a uniform linear load pₖ prevails in the nip N_{KV}, said pressure being illustrated in Fig. 1B. The situation illustrated in Figs. 1A and 1B corresponds to the situation illustrated above in Fig. A1 in a prior-art Pope-type reel-up.

As is shown in Figs. 2A and 2C, the reeling nip Nₖₕ has been shifted to the horizontal centre plane of the Pope cylinder 10, and at the same time the central axle 11 of the Pope cylinder 10 has been rotated by means of particular power units so that the loading members 14,15 have been shifted to the plane of the nip Nₖₕ. At this stage the reeling drum is pressed by both of its axle journals towards the Pope cylinder 10 by the forces F₂, and pressure medium is passed into the loading members 14,15 so that the mantle 12 of the Pope cylinder is deflected in accordance with the reeling drum 20 and with the roll R₁ present on it. Thereat the uniform linear load pₖ illustrated in Fig. 2B prevails in the reeling nip Nₖₕ.

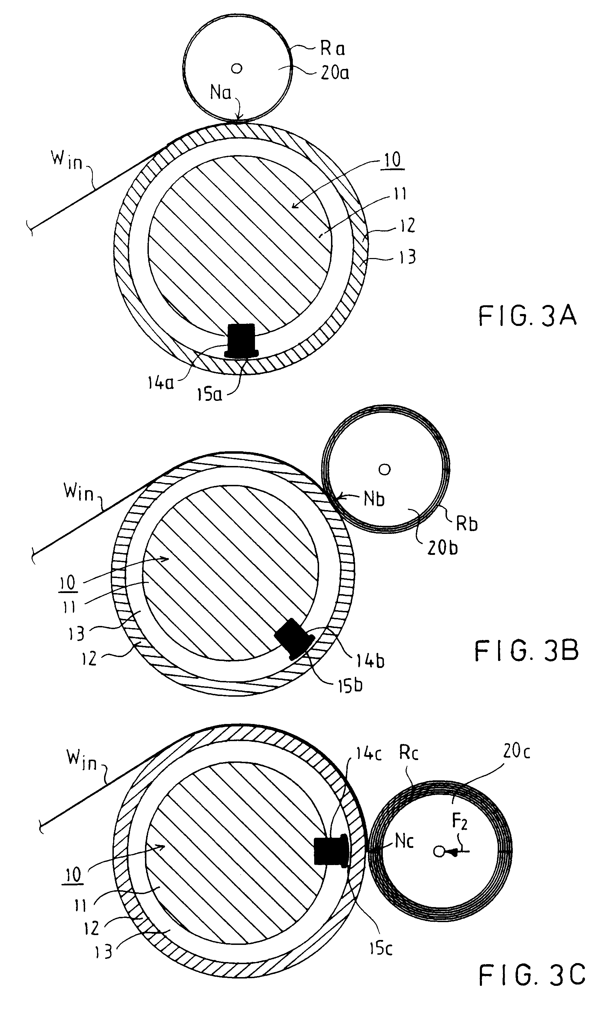

Figures 3A, 3B and 3C illustrate the reeling stages mentioned above provisionally in more detail so that the stage shown in Fig. 3A corresponds to the stage shown in Fig. 1C and the stage shown in Fig. 3C corresponds to the stage shown in Fig. 2C, and Fig. 3B shows an intermediate stage. According to Fig. 3A, the web arrives in the direction of the arrow Wᵢₙ at the roll Rₐ formed on the reeling drum 20a while the linear load in the reeling nip Nₐ has been adjusted uniform by means of the loading members 14a,15a. As is shown in Fig. 3B, the reeling nip N_{b} has been shifted downwards on the mantle of the cylinder 10, and the central axle of the reeling cylinder 10 has been rotated so that the loading members 14b,15b have moved towards the nip N_{b}. Thereat the loading members 14b,15b are loaded by means of such forces and the reeling drum 20b is supported by means of such forces that a uniform linear load prevails in the nip N_{b}. In the situation shown in Fig. 3C, the loading members 14c,15c have been shifted to the horizontal centre plane of the cylinder 10 by rotating the axle 11. Thereat the reeling drum 20c is loaded by both of its axle journals by means of the forces F₂, and such separately adjustable pressures are passed into the various loading members 14c,15c that a uniform distribution pₖ of the linear load prevails in the nip N_{c}. From the situation shown in Fig. 3C the reeling is continued up to full roll while regulating the various pressures of the loading members 14c,15c and while regulating the forces F₂ acting upon the axle journals of the reeling drum 20c either under control by measurement of the radius of the roll R_{c} or under control by some other measurement signal so that a sufficiently uniform linear load pₖ prevails all the time in the nip N_{c}. Moreover, it is advantageous to adjust the level of the linear load in the nip N_{c} to an optimal level in view of the roll formation, hardness, and distribution of hardness.

In the invention most appropriately such an adjustable-crown Pope cylinder 10 is employed whose roll mantle 12 is journalled at both of its ends on the ends of the axle journals of the central axle 11.

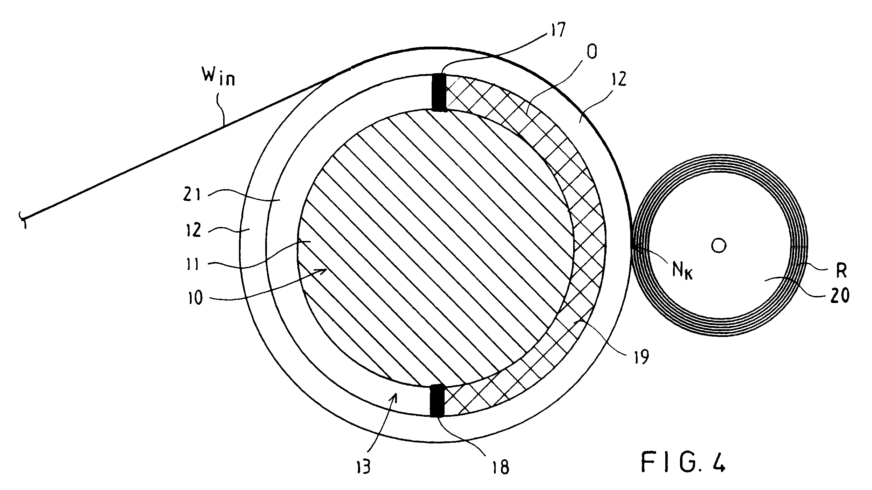

Fig. 4 illustrates such a variation of the invention wherein a particular variable-crown Pope cylinder 10 is employed which comprises a stationary central axle 11 on which a cylinder mantle 12 is journalled revolving by both of its ends. In the space 13 between the central axle 11 and the mantle 12 a pressure space 19 has been isolated by means of axial sealing ribs 17 and 18, into which said space a pressure medium O is passed whose pressure can be regulated. The outside space 20 opposite to the pressure space 19 defined by the sealing ribs 17 and 18 is an empty space not loaded by a pressure medium. In this way a floating variable-crown roll construction is provided by means of which it is possible to accomplish quite a uniform distribution pₖ of the nip pressure at the various stages of reeling described above. The reeling stage illustrated in Fig. 4 corresponds to the stage illustrated above in Figs. 2C and 3C, wherein the roll R grows around the reeling drum 20 when the latter is supported on the rails 32 by its axle journals.

Fig. 6 shows an alternative reel-up in which the invention can be applied. According to Fig. 6, the reel-up comprises a frame construction 41, on whose vertical parts 42 and horizontal parts 43 bearing supports 23 are attached, onto whose support the reeling drum 20 can be brought. The making of the roll R is carried out on support of the bearing supports 23 from the beginning to the end while the reeling drum 20 is stationary in its position. The reel-up comprises a reeling cylinder 10, whose construction is a variable-crown or adjustable-crown construction in the way described above. The reeling cylinder 10 or the reeling drum 20 is driven. The web W arrives in the reel-up in the direction Wᵢₙ, and having run about a quarter of a revolution around the mantle 12 of the reeling cylinder 10, the web W enters into the reeling nip Nₖ, whose linear load is regulated in accordance with the invention. The reeling cylinder 10 is attached to the vertical arms 23 by its axle journals 24, said arms 23 being linked from their lower ends by means of horizontal shafts 22a in connection with the frame construction 41. The upper ends of the vertical arms 22 are affected by hydraulic cylinders 25, whose piston rods 26 are connected to the axle journals 24 of the reeling drum 10. The lower ends of the hydraulic cylinders 25 are connected to the frame construction 41 by means of horizontal articulated shafts 27. By means of the hydraulic cylinders 25, an appropriate level of linear load is produced in the reeling nip Nₖ. Besides the distribution of the linear load in the reeling nip Nₖ, the level of linear load in said nip can also be regulated by the hydraulic loading members 14,15.

## Claims

1. Method in a reel-up for paper web (W), wherein the roll is formed around a reeling drum (20) and/or on the support of carrier rolls or carrier belts and wherein a reeling cylinder (10) is used, which forms a reeling nip (N) with the roll to be produced, **characterized** in that in the method the deflection of the cylinder mantle (12) revolving around the central axle (11) of the reeling cylinder (10) is adjusted in the different stages of reeling by means of which the distribution of the linear load in the reeling nip (N)in the axial direction is controlled, and that in the method such a variable crown reeling cylinder (10) is used within whose rotatable roll mantle (12) a series (N pcs.) of loading members (14,15) is fitted, into which or into blocks of which a pressure medium of separately adjustable pressure is passed.

2. Method as claimed in claim 1, **characterized** in that the level of the linear load in the reeling nip (N) is adjusted by loading the reeling drum (20) and/or the reeling cylinder (10) by its axle journals and/or by regulating the loading force of, most appropriately, hydraulic loading members.

3. Method as claimed in claim 1 or 2, **characterized** in that the glide faces between the inside face of the revolving roll mantle (12) and the loading members (14,15) are lubricated by the pressure medium passed into said loading members (14,15).

4. Method as claimed in any of the claims 1 to 3 in a so-called Pope-type reel-up, wherein the roll (R) that is being produced is pressed against a Pope cylinder (10), which is rotated at a circumferential speed corresponding to the reeling speed and in which method the reeling drum (20) is brought into nip contact with the Pope cylinder (10) and the reeling is continued in nip contact with the Pope cylinder (10) until the roll (R) reaches its full dimension, whereupon the roll (R) is taken apart from the nip contact and the web (W) is guided to be reeled around the next reeling drum (20) brought into contact with the Pope cylinder (10), **characterized** in that in the method the deflection of the mantle (12) of the Pope cylinder (10) is adjusted by zones by means of hydraulic loading members.

5. Method as claimed in any of the claims 1 to 4, **characterized** in that, at the initial stage of the reeling (Fig. 3A), the reeling drum (20a) is relieved by means of certain forces (F₁) (Fig. 1A), that as the loading members (14a,15a) are turned to the opposite side of the reeling nip (Nₐ), by means of the loading members the free deflection of the mantle (12) of the reeling cylinder is compensated for so that the pressure in the reeling nip (Nₐ) is substantially uniform (Fig. 1B), that hereupon the reeling nip is shifted downwards on the circumference of the reeling cylinder (10), that the central axle (11) of the reeling cylinder (10) is rotated and thereby the loading members (14b,15b) are shifted towards the reeling nip (N_{b}) (Fig. 3B), and that hereupon, as the reeling drum (20b) is being shifted onto support by the secondary forks (33) in the reel-up, the reeling drum (20c) is loaded by means of said forks (33) by its axle journals towards the loading nip (N_{c}) by means of certain forces (F₂), which are most appropriately adjustable, at which stage the loading members (14c,15c) of the reeling cylinder (10) have been shifted to a location facing the nip (N_{c}), and such a pressure is fed into said loading members (14c,15c) that the distribution of the linear load in the reeling nip (N_{c}) is substantially uniform.

6. Method as claimed in any of the claims 1 to 3, **characterized** in that the method is applied in center-driven reelers, in reelers provided with carrier rolls or with an equivalent set of carrier belts.

7. Reel-up for the reeling of a paper web (W) or equivalent, comprising a reeling cylinder (10) or reeling cylinders, which is/are mounted in connection with the frame construction of the reel-up and on which frame construction supporting members are fitted, by means of which the reeling drum (20) is supported around which the roll (R) to be produced is wound while making use of the support and/or drive nip (N) or nips formed between the roll (R) and the reeling cylinder (10), **characterized** in that one or several reeling cylinders (10) is/are provided with means for adjustment of the deflection of the cylinder mantle (12), which means are fitted inside the cylinder mantle (12) of the reeling cylinder (10) and by means of which means the distribution of the linear load in said nip (N) or nips can be controlled during the reeling.

8. Pope-type reel-up as claimed in claim 7, comprising a Pope cylinder (10), which is mounted stationarily on the frame part of the reel-up and which reel-up comprises primary forks (35,36) on whose support the reeling drum (20') can be brought so as to form a reeling nip (N)on the upper part of the circumference of the Pope cylinder (10), and which device comprises secondary forks (33) and reeling rails (32) on whose support the final stages of the growing of the rolls (R) are carried out**, characterized** in that a variable-crown reeling cylinder is used as the Pope cylinder (10).

9. Reel-up as claimed in claim 7 or 8, **characterized** in that the reeling cylinder (10) comprises a stationary central axle (10) and a cylinder mantle (12) fitted as rotatable around it and that means (14,15) for adjustment of the deflection of the cylinder mantle (12) are fitted in the space (13) between said central axle (11) and the cylinder mantle (12).

10. Reel-up as claimed in any of the claims 7 to 9, **characterized** in that the central axle of the reeling cylinder (10) comprises a series of loading members loaded by means of a hydraulic pressure medium, to which members glide shoes are connected, whose glide faces (15) load the inner face of the cylinder mantle (12), and that adjustable medium pressures can be passed from a source (40) of pressure into each individual loading member or into blocks consisting of loading members, which medium can preferably also be passed to lubricate the glide faces of the loading members.

11. Reel-up as claimed in any of the claims 7 to 10, **characterized** in that the central axle (11) of the reeling cylinder (10) is provided with means of rotation, by which the central axle (11) can be rotated around its center, whereby the location of the loading members (14,15) can be displaced purposefully in view of the crown variation of the cylinder mantle (12).

## Patentansprüche

1. Verfahren zum Aufwickeln einer Papierbahn (W), wobei die Rolle um eine Wickeltrommel (20) und/oder von Trägerrollen oder Trägergurten gestützt gebildet wird, und wobei ein Wickelzylinder (10) verwendet wird, der mit der zu fertigenden Rolle einen Wickelkniff (N) bildet, **dadurch gekennzeichnet, daß** bei dem Verfahren die Durchbiegung des um die Mittelachse (11) des Wickelzylinders (10) drehenden Zylindermantels (12) in den verschiedenen Wickelstufen eingestellt wird, wodurch die Verteilung der linearen Belastung in dem Wickelkniff (N) in axialer Richtung gesteuert wird, und daß in dem Verfahren ein solcher Wickelzylinder (10) mit variabler Wölbung verwendet wird, innerhalb dessen drehbaren Walzenmantels (12) eine Reihe (N stk.) von Belastungselementen (14, 15) angebracht ist, in welche, oder in Blöcke davon, ein Druckmedium mit getrennt einstellbarem Druck geführt wird.

2. Verfahren nach Anspruch 1, dadurch gekennzeichnet, daß die Höhe der linearen Belastung in dem Wickelkniff (N) durch Belasten der Wickeltrommel (20) und/oder des Wickelzylinders (10) an deren Achszapfen, und/oder durch Regulieren der Belastungskraft von am zweckmäßigsten hydraulischen Belastungselementen eingestellt wird.

3. Verfahren nach Anspruch 1 oder 2, dadurch gekennzeichnet, daß die Gleitflächen zwischen der Innenseite des drehenden Walzenmantels (12) und den Belastungselementen (14, 15) durch das in die Belastungselemente (14, 15) geführte Druckmedium geschmiert werden.

4. Verfahren nach einem der Ansprüche 1 bis 3 in einer sogenannten Pope-typ Aufrollung, wobei die zu fertigende Rolle (R) gegen einen Popezylinder (10) gepreßt wird, der mit einer der Wickelgeschwindigkeit entsprechenden Umfangsgeschwindigkeit gedreht wird, und wobei in dem Verfahren die Wickeltrommel (20) mit dem Popezylinder (10) in Kniffkontakt gebracht, und das Aufwickeln in Kniffkontakt mit dem Popezylinder (10) fortgesetzt wird, bis die Rolle (R) ihre volle Größe erreicht, woraufhin die Rolle (R) aus dem Kniffkontakt entfernt, und die Bahn (W) zum Wickeln um die mit dem Popezylinder (10) in Kontakt gebrachte, nächste Wickeltrommel (20) geführt wird, dadurch gekennzeichnet, daß in dem Verfahren die Durchbiegung des Mantels (12) des Popezylinders (10) mittels hydraulischer Belastungselemente zonenweise eingestellt wird.

5. Verfahren nach einem der Ansprüche 1 bis 4, dadurch gekennzeichnet, daß im Anfangszustand des Aufwickelns (Fig.3A) die Wickeltrommel (20a) mittels bestimmter Kräfte (F₁) (Fig.1A) entlastet wird, daß wenn die Belastungselemente (14a, 15a) auf die gegenüberliegende Seite des Wickelkniffs (Nₐ) gedreht werden, durch die Belastungselemente die freie Durchbiegung des Mantels (12) des Wickelzylinders ausgeglichen wird, so daß der Druck in dem Wickelkniff (Nₐ) im wesentlichen gleichförmig ist (Fig.1B), daß daraufhin der Wickelkniff am Umfang des Wickelzylinders (10) abwärts verschoben wird, daß die Mittelachse (11) des Wickelzylinders (10) gedreht wird und dadurch die Belastungselemente (14b, 15b) in Richtung auf den Wickelkniff (N_{b}) (Fig.3B) verschoben werden, und daß daraufhin, wenn die Wickeltrommel (20b) unter stützung durch die sekundäre Gabel (33) in der Aufrollung verschoben wird, die Wickeltrommel (20c) durch die Gabel (33) an ihren Achszapfen in Richtung auf den Belastungskniff (N_{c}) mittels bestimmter Kräfte (F₂), welche am zweckmäßigsten einstellbar sind, belastet, wobei in der Stufe die Belastungselemente (14c, 15c) des Wickelzylinders (10) in eine dem Kniff (N_{c}) gegenüberliegende Stellung verschoben wurden, und ein solcher Druck in die Belastungselemente (14c, 15c) geführt wird, daß die Verteilung der linearen Belastung in dem Wickelkniff (N_{c}) im wesentlichen gleichförmig ist.

6. Verfahren nach einem der Ansprüche 1 bis 3, dadurch gekennzeichnet, daß das Verfahren bei mittig angetriebenen Aufrollungen, bei mit Trägerrollen oder einem entsprechenden Satz Trägergurten versehenen Aufrollungen angewendet wird.

7. Aufrollung zum Aufwickeln einer Papierbahn (W) oder dergleichen, mit einem Wickelzylinder (10) oder Wickelzylindern, der/die in bezug auf die Rahmenkonstruktion der Aufrollung angebracht ist/sind, wobei an der Rahmenkonstruktion Stützelemente angebracht sind, mittels denen die Wickeltrommel (20) gehalten ist, um die die zu fertigende Rolle (R) gewunden wird, während die Stütze und/oder ein zwischen der Rolle (R) und dem Wickelzylinder (10) ausgebildeter Antriebskniff (N) oder -kniffe genutzt werden, dadurch gekennzeichnet, daß ein oder mehrere Wickelzylinder (10) mit Einrichtungen zum Einstellen der Durchbiegung des Zylindermantels (12) versehen ist/sind, wobei die Einrichtungen innerhalb des Zylindermantels (12) des Wickelzylinders (10) angebracht sind, und wobei durch die Einrichtungen die Verteilung der linearen Belastung in dem Kniff (N) oder den Kniffen während des Aufwickelns gesteuert werden kann.

8. Pope-typ Aufrollung nach Anspruch 7, mit einem Popezylinder (10), der stationär am Rahmenteil der Aufrollung angebracht ist, wobei die Aufrollung primäre Gabeln (35, 36) aufweist, auf deren Abstützung die Wickeltrommel (20') gebracht werden kann, um im oberen Abschnitt des Umfangs des Popezylinders (10) einen Wickelkniff (N) zu bilden, und wobei die Vorrichtung eine sekundäre Gabel (33) und Wickelschienen (32) aufweist, auf deren Abstützung die letzten Stufen des Anwachsens der Rollen (R) ausgeführt werden, dadurch gekennzeichnet, daß ein Wickelzylinder mit verstellbarer Wölbung als Popezylinder (10) verwendet ist.

9. Aufrollung nach Anspruch 7 oder 8, dadurch gekennzeichnet, daß der Wickelzylinder (10) eine stationäre Mittelachse (11) und einen drehbar um diese angebrachten Zylindermantel (12) aufweist, und daß Einrichtungen (14, 15) zum Einstellen der Durchbiegung des Zylindermantels (12) in dem Raum (13) zwischen der Mittelachse (11) und dem Zylindermantel (12) angebracht sind.

10. Aufrollung nach einem der Ansprüche 7 bis 9, dadurch gekennzeichnet, daß die Mittelachse des Wickelzylinders (10) eine Reihe von durch ein hydraulisches Druckmedium belasteten Belastungselementen aufweist, welche mit Gleitsteinen verbunden sind, deren Gleitflächen (15) die Innenfläche des Zylindermantels (12) belasten , und daß einstellbare Mediumsdrücke von einer Druckquelle (40) in jedes einzelne Belastungselement oder in Blöcke von Belastungselementen geführt werden können, wobei das Medium vorzugsweise auch zur Schmierung der Gleitflächen der Belastungselemente zugeführt werden kann.

11. Aufrollung nach einem der Ansprüche 7 bis 10, dadurch gekennzeichnet, daß die Mittelachse (11) des Wickelzylinders (10) mit Einrichtungen zur Drehung versehen ist, durch die die Mittelachse (11) um ihre Mitte gedreht werden kann, wodurch die Lage der Belastungselemente (14, 15) im Hinblick auf die Wölbungsveränderung des Zylindermantels (12) gezielt verlagert werden kann.

## Revendications

1. Procédé d'enroulement d'une bande de papier (W), dans lequel le rouleau est formé autour d'un tambour d'enroulement (20) et/ou sur le support de rouleaux porteurs ou de courroies porteuses, et dans lequel un cylindre d'enroulement (10) est utilisé, qui forme une zone de pincement d'enroulement (N) avec le rouleau à produire, caractérisé en ce que dans ce procédé, la déflexion de l'enveloppe (12) du cylindre qui tourne autour de l' axe central (11) du cylindre d'enroulement (10) est ajustée au cours des diverses étapes de l'enroulement, et bu moyen duquel la distribution de la charge linéaire dans la zone de pincement d'enroulement (N) dans la direction axiale est contrôlée, et en ce que dans le procédé on utilise un cylindre d'enroulement à couronne variable (10) dans l'enveloppe rotative (12) duquel est montée une série (N éléments) d'éléments de charge (14, 15), dans lesquels ou dans des blocs desquels est envoyé un agent de pression qui peut être réglé de façon séparée.

2. Procédé selon la revendication 1, caractérisé en ce que le niveau de la charge linéaire dans la zone de pincement d'enroulement (N) est ajusté en chargeant le tambour d'enroulement (20) et/ou le cylindre d'enroulement (10) par ses fusées d'axe et/ou en régulant la force de charge d'éléments de charge qui sont de préférence hydrauliques.

3. Procédé selon la revendication 1 ou 2, caractérisé en ce que las faces de glissement entre la face interne de l'enveloppe rotative (12) du rouleau et les éléments de charge (14, 15) sont lubrifiées par l'agent de pression qui est envoyé dans lesdits éléments de charge (14, 15).

4. Procédé selon l'une quelconque des revendications 1 à 3 dans un dispositif d'enroulement dit Pope, dans lequel le rouleau (R) qui est en cours de production est pressé contre un cylindre Pope (10), qui est entraîné en rotation selon une vitesse circonférentielle correspondant à la vitesse d'enroulement, et procédé dans lequel le tambour d'enroulement (20) est amené en contact pour former une zone de pincement avec le cylindre Pope (10) et l'enroulement se poursuit dans le zone de pincement en contact avec le cylindre Pope (10) jusqu'à ce que le rouleau (R) atteigne sa dimension totale, suite à quoi la rouleau (R) est retiré de son contact dans la zone de pincement et la bande (W) est guidés de façon à être enroulée autour du tambour d'enroulement suivant (20) amené en contact avec le cylindre Pope (10), caractérisé en ce que dans ce procédé, la déflexion de l'enveloppe (12) du cylindre Popé (10) est ajustée par zones au moyen d'éléments de charge hydrauliques.

5. Procédé selon l'une quelconque des revendications 1 à 4, caractérisé en ce qu'au stade initial de l'enroulement (figure 3A), le tambour d'enroulement (20a) est soulagé au moyen de certaines forces (F1) (fig. 1A) en ce que lors du déplacement des éléments de charge (14a, 15a) sur le côté opposé de la zone de pincement d'enroulement (Nₐ), la déflexion libre de l'enveloppe (12) du cylindre d'enroulement est compensée par les éléments de charge de manière que la pression dans la zone de pincement d'enroulement (Nₐ) soit sensiblement uniforme (figure 1B), en ce qu'ensuite la zone de pincement d'enroulement est déplacée vers le bas sur la circonférence du cylindre d'enroulement (10), en ce que l'axe central (11) du cylindre d'enroulement (10) est tourné et les éléments de charge (14b, 15b) sont ainsi décalés en direction de la zone de pincement (N_{b}) (figure 3B), et en ce qu'ensuite à mesure que le tambour d'enroulement (20b) est déplacé et amené sur las fourches secondaires (33) du dispositif d'enroulement, le tambour d'enroulement (20c) est chargé au moyen desdites fourches (33) par ses fusées d' axe en direction de la zone de pincement de charge (N_{c}) au moyen de certaines forces (F₂) qui sont de préférence réglables, stade auquel les éléments de charge (14c, 15c) du cylindre d'enroulement (10) ont été décalés vers une position face à la zone de pincement (N_{c}), et une telle pression est envoyée dans les éléments de charge (14c, 15c) pour que la distribution de la charge linéaire dans la zone de pincement d'enroulement (Nc) soit sensiblement uniforme.

6. Procédé selon l'une quelconque des revendications 1 à 3, caractérisé en ce que le procédé est appliqué à des enrouleuses à commande centrale ou à des enrouleuses munies de rouleaux porteurs ou d'un jeu équivalent de courroies porteuses.

7. Dispositif d'enroulement pour l'enroulement d'une bande de papier (W) ou équivalent, comprenant un cylindre d'enroulement (10) ou des cylindres d'enroulement, qui est ou sont montés sur le bâti du dispositif d'enroulement et sur lequel bâti sont montés dos éléments de support au moyen desquels le tambour d'enroulement (20) est supporté et autour duquel le rouleau (R) à produire est enroulé en utilisant la ou les zones de pincement de support et/ou d'entraînement (N) formées entra le rouleau (R) et le cylindre d'enroulement (10), caracterisé en ce qu'un ou plusieurs cylindres d'enroulement (10) est ou sont prévus et munie de moyens pour ajuster la déflexion de l'enveloppe (12)du cylindre, ces moyens étant montés à l'intérieur de l'enveloppe (12) du cylindre d'enroulement (10) et au moyen desquels la distribution de la charge linéaire dans ladite ou lesdites zones de pincement (N) peut être contrôlée pendant l'enroulement.

8. Dispositif d'enroulement de type Pope selon la revendication 7, comprenant un cylindre Pape (10) qui est monté de façon stationnaire sur le bâti du dispositif d'enroulement, lequel dispositif comprend des fourches primaires (35, 36) sur le support desquelles peut être amené lé tambour d'enroulement (20') pour former une zone de pincement d'enroulement (N) sur la partie supérieure de la circonférence du cylindre Pope (10), et lequel dispositif comprend des fourches secondaires (33) et et des rails d'enroulement (32) sur le support desquels sont réalisées les étapes finales de la croissance des rouleaux (R), caractérisé en ce qu'on utilise en tant que cylindre Pope (10) un cylindre d'enroulement à couronne variable.

9. Dispositif d'enroulement selon la revendication 7 ou 8, caractérisé en ce que le cylindre d'enroulement (10) comprend un axe central stationnaire (11) et une enveloppe (12) montée de façon rotative autour de lui, et en ce que des éléments (14, 15) pour le réglage de la déflexion de l'enveloppe (12) du cylindre sont disposés dans l'espace (13) entre ledit axe central (11) et l'enveloppe (12) du cylindre.

10. Dispositif d'enroulement selon l'une quelconque des revendications 7 à 9, caractérisé en ce que l' axe central du cylindre d'enroulement (10) comprend une série d'éléments de charge, chargés au moyen d'un agent de pression hydraulique, éléments auxquels sont reliés des patins de glissement dont les faces de glissement (15) chargement la face interne de l'enveloppe (12) du cylindre, et en ce que des pressions réglables d'un agent de pression peuvent être transmises depuis une source de pression (40) dans chaque élément de charge individuel ou dans dos blocs consistant en des éléments de charge, lequel agent peut être transmis de préférence également pour lubrifier les faces de glissement des éléments de charge.

11. Dispositif d'enroulement selon l'une quelconque des revendications 7 à 10, caractérisé en ce que l' axe central (11) du cylindre d'enroulement (10) est muni de moyens d'entraînement en rotation, par lesquels l' axe central (11) peut être tourné autour de son centre, ce grâce à quoi l'emplacement des éléments de charge (14, 15) peut être déplacé de façon voulue pour modifier la couronne de l'enveloppe (12) du cylindre.
